# EUROPÄISCHE PATENTANMELDUNG

(11) **EP 1 447 381 A2**
(43) Veröffentlichungstag der Anmeldung: **18.08.2004**
(21) Anmeldenummer: 04400002.4
(22) Anmeldetag: 21.04.2000
(51) Int. Cl.: C01F 7/02, C01F 7/34, C04B 38/00, C25D 13/02, C04B 35/111

(54) **Nanoporöse Al2O3-Produkte und Verfahren zu ihrer Herstellung**

(30) Priorität: 14.05.1999 DE 19922492
(62) Teilanmeldung aus: 00938515.4
(71) Anmelder: Fraunhofer-Gesellschaft zur Förderung der angewandten Forschung e.V., 80686 München (DE)
(72) Erfinder: Ma, Hongwei, 01257 Dresden (DE); Krell, Andreas, 01217 Dresden (DE)
(74) Vertreter: Rauschenbach, Marion, Dipl.-Ing.

(57) **Zusammenfassung**

Die Erfindung bezieht sich auf das Gebiet der technischen Keramik und betrifft ein Syntheseverfahren für solche Produkte aus Aluminiumoxiden unterschiedlicher Kristallstruktur.

Aufgabe der Erfindung ist die Beschreibung eines auf chlorfreie Precursoren der Al-Hydrate bzw. -Hydroxide aufbauenden und für technische Maßstäbe handhabbaren Verfahrens zur Herstellung von nanoporösen Al₂O₃-Sinterprodukten.

Die Aufgabe wird gelöst durch ein Verfahren zur Herstellung von nanoporösen Al₂O₃-Sinterprodukten, bei dem
- organische oder chlorfreie anorganische Precursoren gelöst oder zu einem Sol verarbeitet und hydrolysiert werden und
- eine anschließende Trocknung gefolgt von einer Kalzinierung bei Temperaturen zwischen 350 und 750 °C durchgeführt wird.

## Beschreibung

### Technisches Gebiet

Die Erfindung bezieht sich auf das Gebiet der technischen Keramik und betrifft nanoporöse Al₂O₃-Produkte und ein Syntheseverfahren für solche Produkte aus Aluminiumoxiden unterschiedlicher Kristallstruktur, wie sie beispielsweise als poröse Filtrationsmembranen oder Katalysatorträger, als dichtgesinterte Substratschichten oder kompakte Verschleißteile eingesetzt werden können.

### Stand der Technik

Keramische Sinterprodukte auf der Basis von Aluminiumoxid (Al₂O₃) finden wegen der vorteilhaften chemischen und oxidativen Beständigkeit dieser Stoffe breite Verwendung. Dies gilt sowohl für dichtgesinterte Produkte (z.B. als Werkzeugwerkstoff oder verschleißresistente Maschinenbauteile) wie auch für poröse Ausführungen (z.B. als Katalysatorträger oder als Filterwerkstoff). Die Entwicklung immer feiner strukturierter Sintergefüge ist dabei ein vorrangiges Ziel der keramischen Werkstoffentwicklung, sowohl auf dem Gebiet dichtgesinterter Erzeugnisse mit dem Ziel höherer Härte und Verschleißresistenz wie auf dem Gebiet poröser Stoffe, z.B. für Ultrafiltrationsmembranen. Weitere Fortschritte werden dabei entscheidend von der Weiterentwicklung der immer feinkörnigeren Rohstoffe bestimmt.

Synthetisierte keramische Rohstoffe können in sehr unterschiedlicher Form vorliegen: in einer für den nachfolgenden Herstellungsprozeß keramischer Produkte unmittelbar zu verwendenden Phasenmodifikation (z.B. als Korund [α-Al₂O₃]), in einer intermediären Phase (z.B. als eine der sogenannten Übergangstonerden wie γ-Al₂O₃, die für bestimmte keramische Prozesse auch unmittelbar nutzbar sind) oder als chemische Vorstufen (sogenannte Precursoren). So können Aluminium-Monohydrate AIOOH, kristallisiert als Böhmit oder als Diaspor, als Precursoren zur Herstellung der Tonerden dienen, während noch eine Stufe zuvor Verbindungen wie Aluminium-Chlorohydrat Al₂(OH)₅Cl · (2...3H₂O), Aluminium-sec-Butoxid Al[O(CH₃)CHC₂H₅]₃ oder Aluminiumtri-Isopropoxid Al[OCH(CH₃)₂]₃ anorganische oder organische Precursoren zur Herstellung von AIOOH darstellen. Wie z.B. der Böhmit können die meisten dieser Rohstoffe als Lösung, als Sol, als Dispersion in flüssigen Medien (z.B. in Wasser) oder als trockene Pulver vorliegen und dabei unterschiedliche Agglomerations- oder Aggregationszustände aufweisen. Wenn die Kristallite als zusammenhängende Aggregate, als mit einfachen Mitteln nicht auflösbare Agglomerate oder auch als separate, leicht dispergierbare Einzelkristallite auftreten können, so ist der letztgenannte Fall der für viele keramische Verarbeitungsverfahren angestrebte. Er ist aber mit abnehmender Kristallitgröße zunehmend schwerer zu realisieren, so daß die Größe dispergierbarer Partikel meist erheblich größer ist als die Kristallitgröße.

Nachteile der Verwendung speziell chlor-haltiger Precursoren bestehen einerseits darin, dass Chlorreste oft für die Nutzung der Syntheseprodukte ungünstig sind, während anderseits zur vollständigen Entfernung des Chlors hohe Temperaturen bis 900 °C erforderlich sind (Oberbach u.a., cfi/Ber. DKG 74(1997)11/12, 719), was zu Porositätsabbau sowie zu Kristall- und Porenwachstum führt und die Herstellung nanoporöser Strukturen hoher Porosität unmöglich macht.

Für eine quantitative, technisch relevante Bewertung der Feinkörnigkeit solcher Rohstoffe muß deshalb sorgfältig zwischen der vorzugsweise röntgenographisch bestimmten Primärteilchengröße (oft als Kristallitgröße bezeichnet) und der Größe separater Partikel unterschieden werden. Letztere bestimmt man an gut dispergierten Pulversuspensionen z.B. mittels dynamischer Lichtstreuung, Laserbeugung oder Sedimentation (gekoppelt mit Extinktionsmessung). Diese Charakterisierung individueller synthetisierter Partikel verliert allerdings an Bedeutung für Verfahren, bei denen chemische Synthese und Aufbau der polykristallinen Produkt-Struktur in einem Zuge erfolgen, so dass das Synthese-Ergebnis sinnvollerweise durch unmittelbare Bestimmung der Korngröße oder, im Fall poröser Produkte, der Porengröße und Porosität dieses Produktes bewertet wird.

Die feinkörnigsten heute zu Preisen < 150 DM/kg kommerziell erhältlichen Korundpulver zeigen mittlere Partikelgrößen ≥ 150 nm. Noch feinere Al₂O₃-Pulver sind als sogenannte Übergangstonerden (z.B. γ- oder δ-Al₂O₃) verfügbar, und auch bei der Sol/Gel-Synthese dünner Ultrafiltrationsmembranen entstehen Schichten aus solchen Übergangsphasen; noch feinere Poren werden auf Basis von Zeolithen, TiO₂ oder Mischoxiden erzeugt. Diese Phasen sind jedoch sowohl bezüglich ihrer eigenen Eigenschaften wie auch bezüglich ihres Verhaltens bei der Weiterverarbeitung mit einer Reihe von Unzulänglichkeiten behaftet.
Unabhängig vom Herstellungsweg zur Synthese von feinkristallinerem Böhmit, ausgehend von kommerziellem Böhmit (A. Larbot u.a., High Tech. Ceram. (1987) 143-151) oder durch kontrollierte Hydrolyse organischer Precursoren ("Yoldas-Verfahren", S. Alami-Younssi u.a., J. Membr. Sci. (1995) Special Issue, 123-129), liegen die feinsten mit Al₂O₃-Membranen (γ-Phase) erzielbaren mittleren Porendurchmesser bei Werten zwischen ca. 3 und 5 nm, wobei der als Zwischenstufe gebildete Böhmit eine stark anisotrope Partikelform des Al₂O₃ erzeugt, welche die Permeabilität um einen Faktor 2-3 vermindert (A.F.M. Leenars u.a., J. Membrane Sci. 24 (1985) 245-260). Die Kombination mit hydrothermaler Behandlung ermöglicht Porengrößen um 2,5 nm, wenn bei so tiefer Temperatur kalziniert wird, daß die vollständige Umwandlung in Al₂O₃ unterbleibt (M.S. Najjar u.a., US - 5 139 540: "membrane of ... alumina *containing aluminumoxygen repeating units and bearing alkoxide groups"*). Die Herstellung von nichtmetallisch-anorganischen Membranen mit Porengrößen von weniger als 1-3 nm wurde bisher für Stoffe minderer chemischer Beständigkeit wie Hydroxide, Zeolithe, andere Silikat-Verbindungen sowie auf TiO₂- und ZrO₂-Basis beschrieben. Auf dem Gebiet der Al₂O₃-Werkstoffe wurden Porengrößen zwischen 0,5 und 2,5 nm für "aluminiumoxidische" Massen undefinierter Phase beschrieben, jedoch schließt die sehr spezielle Herstellung aus schwierig zu synthetisierenden, äußerst reaktiven und kompliziert handhabbaren Aluminoxanen eine breitere Nutzbarkeit, z.B. für Filtrationsmembranen, aus (N. v. Thienen, DE - 196 38 442 A1: Wirbelschicht-Hydrolyse in Inertgas mit kleinsten Mengen an Wasserdampf über gekühltem Eis).

Es besteht deshalb ein verbreitetes Interesse an der Entwicklung von technisch einfacher handhabbaren Verfahren zur Herstellung von porösen Al₂O₃-Sinterprodukten mit Porengrößen < 2,5 nm (bei hoher Permeabilität)

Bekannt ist nach WO 95/12547 ein Verfahren zur Herstellung von wasserdispergierbaren Tonerdehydraten böhmitischer Struktur und Anwendung derselben. Es werden kolloidale Dispersionen mit einem pH-Wert zwischen 3 und 7 hergestellt, in denen der Böhmit bzw. der Pseudoböhmit in nanokristallinen Strukturen vorliegt. Die Aussagen zur Kristallitgröße ermöglichen keine Angaben zu Partikelgrößen, die bekanntermaßen stets erheblich größer sind als die Partikelgrößen.

Im Zuge der Entwicklung von Nanokorunden ist seit langem versucht worden, das Problem der hohen Transformationstemperaturen und des damit verbundenen Partikel-wachstums dadurch zu überwinden, daß ausgehend von Precursoren ein nicht nur bezüglich der Kristallitgrößen nanoskaliger, sondern auch in seiner Partikelstruktur auf diesem Niveau dispergierbarer Böhmit als Rohstoff synthetisiert wurde. Herkömmlich erfolgt dies durch Hydrolyse von Al-Alkoxiden in Wasser bei Temperaturen > 70 °C, wobei sich Niederschläge bilden, die durch Zugabe von Säure peptisiert werden (B.E. Yoldas, Bull Am. Ceram. Soc. 54(1975)3, 289-290). Die Niederschlagsbildung macht es schwer, die Partikelgröße wie gewünscht zu kontrollieren, und auch die ausgeprägte Form-Anisotropie des entstehenden Böhmites ist für viele Anwendungen ungünstig.

Zusammenfassend sind die Nachteile des bekannten Standes der Technik dadurch zu beschreiben, daß kein Verfahren existiert, mit dem chlorfreie nanoporöse Al₂O₃-Sinterprodukte mit Porengrößen im Bereich zwischen 0,5 und 2,5 nm aus einfach handhabbaren Rohstoffen herstellbar sind; der Ausdruck chlorfrei beschreibt hierbei Zusammensetzungen mit weniger als 0,05 Masse-% Chlor (z.B. als Verunreinigung).

### Darstellung der Erfindung

Die Aufgabe der vorliegenden Erfindung ist die Beschreibung eines auf chlorfreien Precursoren der Al-Hydrate bzw. -Hydroxide aufbauenden und für technische Maßstäbe handhabbaren Verfahrens zur Herstellung von nanoporösen Al₂O₃-Produkten ohne Einschränkung auf einen speziellen Phasenbestand und mit Porengrößen im Bereich zwischen 0,5 und 2,5 nm aus einfach handhabbaren Rohstoffen.

Die Aufgabe wird durch die in den unabhängigen Ansprüchen angegebenen Merkmale gelöst. Vorteilhafte Weiterbildungen finden sich in den abhängigen Ansprüchen.

Erfindungsgemäß wird ein Verfahren angegeben, welches bei höherer Kalzinierung zur Herstellung von Nano-Korund führen würde, hier jedoch durch niedrigere Kalzinierungstemperatur nanoporöse Produkte mit neuartiger Struktur und neuen Eigenschaften entstehen.
Das erfindungsgemäße Verfahren zur Herstellung nanoporöser Al₂O₃-Produkte (z.B. Filtrationsmembranen, Gasdiffusionsbarrieren, gesinterte Granulate für die Katalyse oder als Adsorptionsmittel) beinhaltet folgende Schritte.
Als Ausgangsstoffe dienen entweder chlorfreie anorganische Precursoren in Form von Salzen oder organische Precursoren in Form von Verbindungen des Aluminiums, wie z.B. Alkoxide.
Für die anorganische Variante wird bevorzugt Al-Nitrat eingesetzt, jedoch sind auch andere Verbindungen verwendbar, die leicht in Wasser löslich sind und möglichst rückstandsfrei pyrolysiert werden können. Für die industrielle Handhabung stellt die wäßrige Verarbeitung speziell der anorganischen Salze einen besonderen Vorteil dar. Die Konzentration der wäßrigen Salzlösungen oder Sole sollte zwischen 0,01 und 5 M liegen. Während niedrigere Konzentrationen unwirtschaftlich sind, erschweren höhere Konzentrationen den Syntheseprozess und verursachen ein unerwünschtes Kristallitwachstum. Bevorzugt sind einmolare Lösungen.

In beiden Verfahrensvarianten mit anorganischen oder organischen Precursoren können zusätzlich 1-5 Masse-% Modifikatoren, wie nichtionische Tenside (z.B. Sorbitanester), anionische oberflächenaktive Stoffe, anorganische oder organische komplexbildende Liganden (z.B. Acetylaceton, Ethylaceton-Acetat, Diole) den Hydrolysevorgang dadurch positiv beeinflussen, daß sie der Bildung von Agglomeraten entgegenwirken und so die Größe der synthetisierten Partikel vermindern, die Breite der Partikelgrößenverteilung verengen und die Herausbildung einer gleichmäßigen, isometrischen Partikelform begünstigen.

Im Fall chlorfreier anorganischer Precursoren erfolgt die Herstellung der Lösung oder des Sols in einem flüssigen Medium. Die Precursor-Lösung oder das Precursor-Sol werden dann durch Hinzufügen einer Base im Molverhältnis Base : Precursor = 1 bis 3 einer kontrollierten Hydrolyse unterzogen; Beispiele geeigneter Basen sind NH₄OH, (NH₂)₂CO, (NH₄)HCO₃, (CH₃)₃NHOH. Der kontrollierte Ablauf der Hydrolyse ist entscheidend für die Realisierung der aufgabengemäßen feinkristallinen Strukturen. Die Alterung erfolgt bei einer Temperatur von 60-98 °C für einen Zeitraum von 1 - 72 Stunden. Im Ergebnis entsteht ein quasi-amorphes Al-Hydroxid, welches sich gravierend von bekannten, üblicherweise kristallisierten Hydrolyse-Produkten wie Gibbsit (Al(OH)₃) oder Böhmit (ALOOH) unterscheidet. Einer der resultierenden Vorteile ist die Vermeidung stark anisotroper Partikelformen und die sich daraus u.a. ergebenden Möglichkeiten zum Aufbau nanoporöser Al₂O₃-Filtrationsmembranen verbesserter Permeabilität.

Für die Verwendung organischer Precursoren sind organische Lösungsmittel, z.B. Alkohole mit Kettenlängen < 8, erforderlich. Die Struktur der gebildeten Lösungen oder Sole und das Kalzinierungsverhalten der Gele unterscheiden sich in Abhängigkeit vom Wassergehalt des Hydrolyse-Mediums. Werden (i) Al-Alkoxide mit Kettenlängen < 8 unter erheblichem Wasserüberschuß in das o.a. quasi-amorphe Al-Hydroxid überführt (z.B. bei einem Molverhältnis Precursor : H₂O > 50), so muß die in Wasser befindliche Lösung oder das Sol durch Zugabe von Substanzen wie HNO₃ oder NH₄NO₃ auf pH = 3 - 5 eingestellt und so stabilisiert werden. Erfolgt dagegen (ii) die Hydrolyse in einer Umgebung mit geringerem, im Zuge der Hydrolyse überwiegend gebundenem Wasseranteil (Molverhältnis Wasser: Precursor ≤ 3), so findet sich das Hydrolyseprodukt in einer vom organischen Lösungsmittel dominierten Umgebung und muß in seinem Dispergierungszustand durch geeignete komplexbildende Liganden stabilisiert werden (z.B. Acetylaceton, Ethylacetonacetat). In beiden Varianten (i) wie (ii) wird die Precursor-Lösung oder das Sol zunächst für eine Zeitdauer von weniger als 5 Stunden bei nicht mehr als 50 °C (z.B. bei Raumtemperatur) gealtert, gefolgt von einer 1- bis 24-stündigen Alterungsperiode bei erhöhter Temperatur im Bereich von 80-98 °C.

Im Falle der Herstellung von porösen Membranen werden Lösung oder Sole durch bekannte Maßnahmen auf einem porösen Substrat abgeschieden und getrocknet. Für andere Anwendungen (wie z.B. als Katalysatorträger in Form von Granulaten oder von makroskopischen Körpern definierter Geometrie) sind dagegen andere flüssige oder trockene Formgebungsverfahren wie Gelbildung, Gießen und kaltisostatisches Pressen oder Verfahren der Fest/Flüssig-Trennung (z.B. Rotationsverdampfung, Sprühtrocknung, Gefriertrocknung) nutzbar.
Das quasi-amorphe Al-Hydroxid-Zwischenprodukt kann schon bei niedrigen Temperaturen in Al₂O₃ überführt werden, wobei die Ausführungsbeispiele zeigen werden, daß je nach Prozeßweg und Kalzinierungstemperatur unterschiedliche Al₂O₃-Modifikationen einstellbar sind (z.B. ist es für die Verwendung als Katalysator oft vorteilhaft, kristalline Phasen [wie α-Al₂O₃] mit inhärenten katalytischen Eigenschaften zu vermeiden und statt dessen ein amorphes Produkt zu erzeugen). Zum Zweck der Überführung in ein Al₂O₃-Produkt erfolgt je nach angestrebtem Sinterzustand eine thermische Behandlung zwischen 350 °C und 750 °C. Diese Temperatur kann durch Zusatz von Al₂O₃-Keimen der gewünschten Phase niedrig gehalten werden, was zu besonders kleinen Partikel- und somit Porengrößen führt.

Eine besonders vorteilhafte Ausschöpfung des hohen Potentials an Sinterfähigkeit, das Nanopartikel auszeichnet, ist dann gegeben, wenn es gelingt, eine möglichst ideale Homogenität der Partikelpackung in der abgeschiedenen, zunächst noch ungesinterten Schicht zu realisieren, z.B. durch Abscheidung der Partikel des hydrolysierten Soles oder aus einer Suspension ideal dispergierten Nano-Korundes per Elektrophorese. Solche elektrophoretische Prozesse sind auch zur Abscheidung von Beschichtungen aus Suspensionen der erfindungsgemäß kalzinierten Übergangsphasen oder des quasi-amorphen Al-Hydroxid-Zwischenproduktes nutzbar und können z.B. für poröse metallische Substrate angewandt werden.

Dabei können die erfindungsgemäßen nanoporösen Al₂O₃-Produkte erfindungsgemäßer Herstellung aus beliebigen Phasen des Al₂O₃ bestehen und zeigen einen mittleren Porendurchmesser von 0,5 - 2,5 nm bei mindestens 30 Vol.-% Porosität.

### Bester Weg zur Ausführung der Erfindung

Im weiteren wird die Erfindung an mehreren Ausführungsbeispielen erläutert.

Alle hier beschriebenen Versuche verzichten auf die Verwendung chlorhaltiger Precursor-Ausgangsstoffe.

### Beispiel 1

Zur Sol/Gel-Herstellung eines *nano*porösen amorphen Al₂O₃-Produktes mit mittlerer Porengröße < 2,5 nm wurden 0,1 Mol Aluminium-Sec-Butylat (ASB) zunächst mit 0,1 Mol Ethylacetoacetat (EtAc) komplexiert und anschließend in 0,5 Mol Isopropanol gelö st. Zwecks Hydrolyse wurde dieser organischen Precursor-Lösung bei Raumtemperatur tropfenweise eine Mischung von 0,3 Mol Wasser und 0,5 Mol Isopropanol zugegeben, so daß das Molverhältnis ASB : H₂O einen Wert von 1 : 3 erreichte. Die so hergestellte Mischung wurde 2 Stunden bei Raumtemperatur gerührt, anschließend erfolgte eine Alterung von weiteren 2 Stunden bei 95 °C unter fortgesetztem Rühren.

Das gebildete Sol wurde durch Tauchbeschichtung auf einem porösen Substrat aus α-Al₂O₃ abgeschieden. Das Infiltrieren des Sols in die oberen Schichten des Substrates ist mit einer gradierten Änderung des Feststoffgehaltes verbunden und löst den Übergang in den Gelzustand aus. Nach Trocknung und Kalzinieren an Luft entstanden Filtrationsmembranen folgender Struktur (die Porositätsmessung erfolgte an ungestützten [substratfreien] Sinterprodukten wie allgemein üblich):

| Sintertemperatur- und Dauer | Porositätsmeßverfahren | Phasenbestand | mittlere Porengröße | Porosität |
|---|---|---|---|---|
| 400 °C / 2 h | N₂-Adsorption/-Desorption (ASAP-2000) | Al₂O₃ (amorph) | 1,76 nm | 45 Vol.-% |

### Beispiel 2

Eine geringfügige Veränderung des Verfahrens und der Kalzinierungstemperatur führt zu Produkten ähnlicher Porengröße und Porosität, mit jedoch kristalliner Ausprägung des Al₂O₃. Zu diesem Zweck wurden 0,1 Mol Aluminium-Sec-Butylat (ASB) zunächst mit 0,1 Mol Ethylacetoacetat (EtAc) komplexiert und anschließend in 1 Mol Isopropanol gelöst. Zwecks Hydrolyse wurde diese organische Precursor-Lösung bei Raumtemperatur solange tropfenweise zu einer Mischung von HNO₃ und Wasser gegeben (Molverhältnis H₂O : HNO₃ = 100 : 0,5), bis ein Molverhältnis von ASB : H₂O = 1 : 100 erreicht war. Die so hergestellte Mischung wurde 2 Stunden bei Raumtemperatur gerührt, anschließend erfolgte eine Alterung von weiteren 2 Stunden bei 95 °C unter fortgesetztem Rühren.

Das gebildete Sol zeigte einen pH-Wert von 4 und wurde auf dieselbe Weise auf einem porösen Substrat aus α-Al₂O₃ abgeschieden, getrocknet, kalziniert und charakterisiert wie oben beschrieben. Das Ergebnis ist:

| Sintertemperatur- und Dauer | Porositätsmeßverfahren | Phasenbestand | mittlere Porengröße | Porosität |
|---|---|---|---|---|
| 600 °C / 2 h | N₂-Adsorption/-Desorption (ASAP-2000) | γ-Al₂O₃ | 2,1 nm | 40 Vol.-% |

## Patentansprüche

1. Verfahren zur Herstellung von nanoporösen Al₂O₃-Produkten, bei dem
- als Ausgangsstoffe chlorfreie anorganische Precursoren in einem flüssigem Medium gelöst oder zu einem Sol verarbeitet werden,
- diese Lösung oder das Sol durch Hinzufügen einer Base im Mol-Verhältnis Base : Precursor = 1 bis 3 hydrolysiert wird,
- eine Alterung bei Temperaturen zwischen 60 und 98 °C für 1 bis 72 h erfolgt,
- eine anschließende Trocknung gefolgt von einer Kalzinierung bei Temperaturen zwischen 350 und 750 °C zur Überführung des hydrolysierten Precursors in Aluminiumoxid durchgeführt wird.

2. Verfahren zur Herstellung von nanoporösen Al₂O₃-Produkten, bei dem
- als Ausgangsstoffe organische Precursoren in einem flüssigen Medium zu einer Lösung oder einem Sol verarbeitet werden,
- wonach die Hydrolyse entweder unter Wasserüberschuß durch Hinzufügen der Precursor-Lösung oder des Precursor-Sols zu Wasser bei einem Molverhältnis Wasser : Precursor > 3 und unter Zusatz einer zu pH = 3-5 führenden Säure erfolgt oder durch Zugabe einer auf ein Molverhältnis Wasser : Precursor ≤ 3 begrenzten Wassermenge zu dem in diesem Fall mit komplexbildenden Liganden zu versetzenden Precursor-Sol oder der Precursor-Lösung,
- eine Alterung bei Temperaturen von ≤ 50 °C innerhalb von 5 h und anschließend eine Alterung bei Temperaturen von 80 bis 98 °C innerhalb von 1 bis 24 h erfolgt,
- eine anschließende Trocknung gefolgt von einer Kalzinierung bei Temperaturen zwischen 350 und 750 °C durch Überführung des hydrolysierten Precursors in Aluminiumoxid durchgeführt wird.

3. Verfahren zur Herstellung von nanoporösen Schichten nach Anspruch 1 oder 2, bei dem nach der Alterung die Lösung oder das Sol auf ein Substrat aufgebracht und danach die Trocknung und Kalzinierung durchgeführt wird.

4. Verfahren nach Anspruch 3, bei dem nach der Alterung der Lösung oder des Sols das Material auf einem Substrat abgeschieden wird, wobei die Abscheidung der Schichten unter Gelbildung erfolgt.

5. Verfahren nach einem der Ansprüche 1 bis 4 , bei dem der Lösung oder dem Sol Keime einer Übergangstonerde zugesetzt werden.

6. Verfahren zur Beschichtung poröser oder dichter metallischer Substrate, bei dem die Partikel des hydrolysierten Sols, hergestellt nach Anspruch 1 oder 2, oder die Partikel einer Suspension der nach Anspruch 1 oder 2 hergestellten nanoporösen Aluminiumoxide elektrophoretisch auf den metallischen Substraten abgeschieden werden.

7. Verfahren zur Beschichtung poröser oder dichter metallischer Substrate nach Anspruch 6, bei dem nach der elektrophoretischen Abscheidung der Partikel eine Wärmebehandlung bei Temperaturen von 350 - 750 °C durchgeführt wird.

8. Nanoporöse Al₂O₃-Sinterprodukte, hergestellt nach mindestens einem der Ansprüche 1 bis 7, bei denen ein mittlerer Porendurchmesser im Bereich zwischen 0,5 und 2,5 nm bei einer Porosität von ≥ 30 Vol.-% vorliegt.
